# EUROPÄISCHE PATENTSCHRIFT

(11) **EP 3 793 855 B1**
(45) Veröffentlichungstag und Bekanntmachung des Hinweises auf die Patenterteilung: **23.02.2022**
(21) Anmeldenummer: 19724405.6
(22) Anmeldetag: 10.05.2019
(51) Int. Cl.: B60K 35/00, B60K 37/06, B60J 1/02, B60J 1/08, B60J 1/00, B60J 3/04

(54) **KRAFTFAHRZEUG MIT EINER ANZEIGEVORRICHTUNG MIT ZWEI EINTEILIG MITEINANDER AUSGEBILDETEN UND GEWINKELT ZUEINANDER ANGEORDNETEN TEILBEREICHEN**
MOTOR VEHICLE HAVING A DISPLAY DEVICE WITH TWO PARTS WHICH ARE EMBODIED IN ONE PIECE WITH ONE ANOTHER AND ARRANGED AT AN ANGLE WITH RESPECT TO ONE ANOTHER
VÉHICULE AUTOMOBILE POURVU D'UN DISPOSITIF D'AFFICHAGE POURVU DE DEUX ZONES PARTIELLES AGENCÉES ENSEMBLE D'UNE PIÈCE ET DE MANIÈRE À ÊTRE ENROULÉES L'UNE PAR RAPPORT À L'AUTRE

(30) Priorität: 18.05.2018 DE 102018207932
(43) Veröffentlichungstag der Anmeldung: 24.03.2021
(73) Patentinhaber: Audi AG, 85045 Ingolstadt (DE)
(72) Erfinder: MERTENS, Joris, 85051 Ingolstadt (DE); HÉLOT, Jacques, 85051 Ingolstadt (DE); REDEKER, Immo, 85051 Ingolstadt (DE)
(86) Internationale Anmeldenummer: PCT/EP2019/062061
(87) Internationale Veröffentlichungsnummer: WO 2019/219534

(56) Entgegenhaltungen:
- WO-A1-87/03846
- DE-A1-102007 057 725
- DE-A1-102012 208 565
- DE-A1-102016 220 245
- JP-A- S 604 414
- KR-A- 20130 071 239
- US-A1- 2017 176 744

## Beschreibung

Die Erfindung betrifft ein Kraftfahrzeug mit einer Anzeigevorrichtung zum Anzeigen zumindest einer Information, wobei die Anzeigevorrichtung einen als Sichtscheibe des Kraftfahrzeugs ausgebildeten und zumindest bereichsweise einen Innenraum des Kraftfahrzeugs begrenzenden ersten Teilbereich und einen zweiten Anzeigeteilbereich, welcher zum Anzeigen der Information ausgebildet ist, aufweist.

Es ist bekannt, dass heutige Schalttafeln eine Vielzahl von Bedienelementen aufweisen, wobei insbesondere passive Blenden die Bedienflächen voneinander trennen und nicht zur Bedienung mit beitragen. Insbesondere sind dann diese Blenden passiv und getrennt zu einer beispielsweise Frontscheibe des Kraftfahrzeugs ausgebildet. Es findet dadurch kein optisches Verbinden beziehungsweise Verlinken zu den entsprechenden Scheiben des Kraftfahrzeugs statt. Die Abdeckungen beziehungsweise die Blenden dienen lediglich zur optischen Trennung der einzelnen Bedienelemente.

Aus der DE 100 39 131 A1 ist ein Kraftfahrzeug mit als Bildschirm ausgebildetem Fenster bekannt. Alle oder mindestens ein Fenster, vorzugsweise die Windschutzscheibe, sind als Bildschirm zum Beispiel mit LCD-Anzeigen für einen oder mehrere im Fahrzeug befindlichen Computer bereitgestellt oder es kann ein Hologramm im Bereich der Fenster projiziert werden.

Ferner offenbart die DE 10 2010 056 411 A1 eine Anzeigevorrichtung für ein Kraftfahrzeug mit einer ersten und einer zweiten Anzeigeeinheit. Zur Darstellung von Komfortinformationen, insbesondere auf Fahrerassistenzsysteme bezogenen Informationen, ist die erste Anzeigeeinheit in Form eines langgestreckten, grafikfähigen Farb-Displays in der Umgebung der Scheibenwurzel der Frontscheibe angeordnet, und ist die zweite Anzeigeeinheit ein im Fahrzeug, insbesondere in der Mittelkonsole des Fahrzeugs, angeordnetes weiteres Display.

Des Weiteren offenbart die DE 10 2011 121 617 A1 ein Verfahren zur Anzeige einer Information in einem Fahrzeuginnenraum mittels einer Anzeigevorrichtung eines Kraftfahrzeugs. Zur Anzeige der Information wird auf der sich in zumindest eine horizontale Richtung erstreckenden Anzeigevorrichtung mittels einer benutzerseitigen Bedienvorgabe zumindest ein horizontaler, eine geringere räumliche Ausdehnung als die Anzeigevorrichtung aufweisender unterer Bereich der Anzeigevorrichtung bestimmt, dessen Position auf der Anzeigeeinrichtung zumindest entlang der horizontalen Richtung benutzerseitig mittels der Bedienvorgabe vorgegeben wird. Der zumindest eine Unterbereich wird zur Anzeigeninformation selektiv angesteuert.

Weiteren relevanten Stand der Technik zeigt die US 2017/176744 A1.

Nachteilig am Stand der Technik ist, dass insbesondere durch passive Bauteile der Anzeigevorrichtungen mögliche Nutzeroberflächen verschwendet werden. Es findet somit keine aktive und physische Interaktion zwischen der Bedieneinheit und der Anzeige vollumfänglich statt. Insbesondere handelt es sich bei den Bedienoberflächen um Oberflächen im primären Sichtbereich eines Insassen des Kraftfahrzeugs, die unbenutzt bleiben.

Aufgabe der vorliegenden Erfindung ist es, ein Kraftfahrzeug zu schaffen, mittels welchem eine verbesserte Bauraumausnutzung im Kraftfahrzeug realisiert werden kann.

Diese Aufgabe wird durch ein Kraftfahrzeug gemäß dem unabhängigen Patentanspruch 1 gelöst.

Ein Aspekt der Erfindung betrifft ein Kraftfahrzeug mit einer Anzeigevorrichtung zum Anzeigen zumindest einer Information. Die Anzeigevorrichtung weist einen als Sichtscheibe des Kraftfahrzeugs ausgebildeten und zumindest bereichsweise einen Innenraum des Kraftfahrzeugs begrenzenden ersten Teilbereich und einen zweiten Anzeigeteilbereich, welcher zum Anzeigen der Information ausgebildet ist, auf.

Die anzuzeigende Information kann durch eine elektronische, optische Anzeigeeinheit des Kraftfahrzeugs erzeugt sein.

Es ist vorgesehen, dass der erste Teilbereich und der zweite Anzeigeteilbereich einteilig ausgebildet sind, wobei die Teilbereiche gewinkelt zueinander anmünden, insbesondere in einem Querschnitt beziehungsweise Längsschnitt betrachtet, und der zweite Anzeigeteilbereich zumindest bereichsweise in den Innenraum des Kraftfahrzeugs hineinragend ausgebildet ist.

Eine Anmündung zwischen dem ersten Teilbereich und dem zweiten Anzeigeteilbereich kann vorzugsweise abgerundet sein, so dass im Querschnitt der Teilbereiche betrachtet eine Außenseite dieser Anmündung des einteiligen Bauteils eckenfrei ausgebildet ist. Ein Winkel zwischen den Teilbereichen bemisst sich dann durch Tangenten an die auch gegebenenfalls gekrümmten Bereiche.

Auch der erste Teilbereich kann als Anzeigeteilbereich zum Anzeigen von Informationen, beispielsweise durch ein Head-up-Display, ausgebildet sein.

Dadurch ist es ermöglicht, dass insbesondere der in den Innenraum hineinragende zweite Anzeigeteilbereich dazu genutzt wird, die Information anzuzeigen. Es wird somit keine Oberfläche im Kraftfahrzeug verschwendet, da insbesondere der in den Innenraum hineinragende zweite Anzeigeteilbereich zur Informationsanzeige genutzt wird. Somit kann verbessert der Bauraum, insbesondere im Innenraum des Kraftfahrzeugs, genutzt werden, um die Anzeige der Information durchzuführen.

Bevorzugt kann vorgesehen sein, dass der zweite Anzeigeteilbereich derart ausgebildet ist, dass die Information je nach Nutzerbedarf im zweiten Anzeigeteilbereich angezeigt werden kann. Beispielsweise kann der Nutzer selbstständig und individuell die entsprechende Information auf dem zweiten Anzeigeteilbereich verschieben und entsprechend anzeigen lassen. Beispielsweise kann dann der zweite Anzeigeteilbereich als Pinnwand für verschiedene Inhalte beziehungsweise Medien genutzt werden.

Durch die einteilige Ausgestaltungsform des ersten Teilbereichs und des zweiten Anzeigeteilbereichs kann insbesondere eine optisch reduzierte und klare Anzeigevorrichtung bereitgestellt werden. Es kann weiterhin eine flexible Nutzung der entsprechenden Bedienflächen am zweiten Anzeigeteilbereich beispielsweise für die Eingabe und das Positionieren der entsprechenden Information bereitgestellt werden. Dadurch kann es erreicht werden, dass die gemäß dem Stand der Technik passiveren Oberflächen auch als aktive Oberflächen genutzt werden können. Insbesondere, sollte beispielsweise die Sichtscheibe als erweiterte Realität (Augmented Reality - AR) genutzt werden, kann so eine verbesserte Informationsdarstellung auf der Sichtscheibe realisiert werden. Des Weiteren kann eine optische und/oder eine technische Verbindung beziehungsweise Verlinkung der Bedienoberfläche beziehungsweise der Anzeigeoberfläche von der Sichtscheibe zu den entsprechenden zweiten Anzeigeteilbereichen realisiert werden. Dadurch kann eine Fusion von Eingabe- und Anzeigemedien realisiert werden.

Insbesondere ist vorgesehen, dass der erste Teilbereich und der zweite Anzeigeteilbereich aus Glas, insbesondere aus Sicherheitsglas, hergestellt sind.

Gemäß einer vorteilhaften Ausgestaltungsform kann der erste Teilbereich als eine Frontscheibe des Kraftfahrzeugs ausgebildet sein. Insbesondere kann die Frontscheibe auch als Windschutzscheibe bezeichnet werden. Insbesondere kann dann die Information entsprechend auf dem zweiten Anzeigeteilbereich der Frontscheibe ausgebildet sein. Ebenfalls möglich ist, dass die Frontscheibe als eine Art Kopf-oben-Anzeigeeinheit ausgebildet ist und somit eine erweiterte Realität innerhalb der Frontscheibe angezeigt werden kann. Dies hat den Vorteil, dass beispielsweise ein Fahrer des Kraftfahrzeugs mit wenig Aufwand die Information innerhalb der Frontscheibe auch während eines Fahrbetriebs des Kraftfahrzeugs erfassen kann, wodurch eine geringere Ablenkung des Fahrers realisiert werden kann. Dies führt zu einer erhöhten Sicherheit im Straßenverkehr.

Es hat sich weiterhin als vorteilhaft erwiesen, wenn der zweite Anzeigeteilbereich als Armaturenbrett des Kraftfahrzeugs ausgebildet ist. Insbesondere ist das Armaturenbrett dachartig ausgebildet und dient als Abdeckung im Kraftfahrzeug von insbesondere Komponenten, die zur Fahrzeugsteuerung des Kraftfahrzeugs dienen. Dieser Dachbereich ist im Stand der Technik lediglich als Abdeckung ausgebildet. Gemäß dem erfindungsgemäßen Kraftfahrzeug wird nun das als zweiter Anzeigeteilbereich ausgebildete Armaturenbrett genutzt, um die Information anzeigen zu können. Mit anderen Worten wird die Information auf dem Armaturenbrett angezeigt. Dies führt dazu, dass der Fahrer den Blickwinkel nur wenig ändern muss, um die Information erfassen zu können. Des Weiteren wird dadurch eine zusätzliche Oberfläche im Kraftfahrzeug genutzt, die zur weiteren Anzeige der Information bereitgestellt werden kann. Somit kann eine Vielzahl von Informationen im Kraftfahrzeug bereitgestellt werden. Insbesondere führt dies dazu, dass eine Informationsdichtereduktion durchgeführt werden kann, wie beispielsweise eine Informationsdichtereduktion auf der Mittelkonsole des Kraftfahrzeugs, da die Anzeigeoberfläche zur Informationsdarstellung vergrößert ist.

In einer weiteren vorteilhaften Ausgestaltungsform ist der erste Teilbereich als eine Seitenscheibe des Kraftfahrzeugs ausgebildet. Mit anderen Worten kann auch die Seitenscheibe als erster Teilbereich genutzt werden. Insbesondere ist dann der zweite Anzeigeteilbereich der Seitenscheibe ebenfalls in den Innenraum hineinragend ausgebildet und die Information kann auf dem zweiten Anzeigeteilbereich der Scheibe angezeigt werden. Somit kann eine weitere Anzeigeoberfläche geschaffen werden, sodass die Informationsdichte reduziert werden kann, da die Mehrzahl der Informationen auf eine größere Oberfläche verteilt werden kann. Insbesondere ist es ermöglicht, dass beispielsweise der Fahrer des Kraftfahrzeugs frei entscheiden kann, welche Information auf dem zweiten Anzeigeteilbereich der Seitenscheibe angezeigt werden kann. Somit kann individuell die Informationsanzeige im Kraftfahrzeug bereitgestellt werden.

Es hat sich weiterhin als vorteilhaft erwiesen, wenn der zweite Anzeigeteilbereich als berührungssensitiver Bildschirm zum Anzeigen der Information und zum Bedienen der Anzeigevorrichtung ausgebildet ist. Mit anderen Worten kann über eine Berührung des zweiten Anzeigeteilbereichs die Information dargestellt werden und eine entsprechende Bedienung, beispielsweise mittels einer Applikation, durchgeführt werden. Dies führt zur Einsparung von komplexen Bedienelementen innerhalb des Kraftfahrzeugs, da insbesondere bereits durch den berührungssensitiven Bildschirm eine Bedienung durchgeführt werden kann. Insbesondere kann vorgesehen sein, dass unterhalb des zweiten Anzeigeteilbereichs dann eine entsprechende Elektronik angeordnet sein kann, die das berührungssensitive Anzeigen und Bedienen zulässt. Dadurch kann hochfunktionell die Anzeigevorrichtung betrieben werden.

In einer weiteren vorteilhaften Ausgestaltungsform ist zwischen dem ersten Teilbereich und dem zweiten Anzeigeteilbereich ein im Wesentlichen spitzer Winkel, insbesondere zwischen 30 Grad und 80 Grad, ausgebildet. Insbesondere ist der spitze Winkel derart ausgebildet, dass zwischen den Tangenten des ersten Anzeigeteilbereichs und des zweiten Teilbereichs der spitze Winkel ausgebildet ist. Insbesondere ist der Winkel abhängig von der Scheibenneigung der Sichtscheibe relativ zum Kraftfahrzeug. Beispielsweise sind bei Sportkraftfahrzeugen die Sichtscheiben spitzer zulaufend als beispielsweise bei einem Geländewagen. Insbesondere ist es durch den spitzen Winkel ermöglicht, dass beispielsweise ein Fahrer des Kraftfahrzeugs frei und ohne Beeinträchtigung durch die Sichtscheibe hindurch beispielsweise eine Umgebung des Kraftfahrzeugs erfassen kann und dennoch die Information zuverlässig auf dem zweiten Anzeigeteilbereich erfassen kann.

Ebenfalls vorteilhaft ist, wenn in dem ersten Teilbereich zumindest bereichsweise eine dimmbare Folie zum Anzeigen der auf dem zweiten Anzeigeteilbereich angezeigten Information integriert ist. Insbesondere ist dies derart ermöglicht, dass mittels der dimmbaren Folie die Information, welche auf dem zweiten Anzeigeteilbereich angezeigt ist, reflektiert wird, sodass die reflektierte Information für den Fahrer des Kraftfahrzeugs ersichtlich ist. Somit kann beispielsweise eine erweiterte Realität für den Fahrer, der durch die Sichtscheibe hindurch blickt, erreicht werden. Insbesondere kann beispielsweise mittels der dimmbaren Folie eine Art Kopf-oben-Anzeigevorrichtung (Head-up-Display) realisiert werden. Dies führt dazu, dass beispielsweise der Fahrer des Kraftfahrzeugs den Blick nicht von der Sichtscheibe wenden muss, um die Information erfassen zu können. Somit kann ein zuverlässiger und sicherer Betrieb des Kraftfahrzeugs ermöglicht werden.

Gemäß einer weiteren vorteilhaften Ausgestaltungsform ist der zweite Anzeigenteilbereich als Scheibenwurzel oder als Scheibendach ausgebildet. Mit anderen Worten befindet sich insbesondere der zweite Anzeigeteilbereich, der zum Anzeigen der Information ausgebildet ist, in einem in Fahrzeughochachse betrachtet unteren Teilbereich der Anzeigevorrichtung. Dieser untere Teilbereich wird auch als Scheibenwurzel bezeichnet. Ebenfalls möglich ist, dass sich der zweite Anzeigeteilbereich an einem in der Fahrzeughochachse betrachteten oberen Teilbereich der Anzeigevorrichtung ausgebildet ist. Insbesondere ist dies sozusagen eine Verlängerung der Anzeigevorrichtung in Richtung des Scheibendachs. Somit kann auf unterschiedliche Art und Weisen die Information an unterschiedlichen Orten im Kraftfahrzeug angezeigt werden. Dadurch ist es ermöglicht, dass vorher passive Oberflächen, mit anderen Worten Oberflächen, die keine Anzeige dargestellt haben, zur Anzeige genutzt werden. Insbesondere führt dies dazu, dass eine Informationsüberflutung auf kleine Teilbereiche im Kraftfahrzeug verhindert werden kann.

Bevorzugt kann vorgesehen sein, dass die Anzeigevorrichtung zwei zweite Anzeigeteilbereich aufweist, wobei ein zweiter Anzeigeteilbereich als Scheibenwurzel ausgebildet ist, und der weitere zweite Anzeigeteilbereich als Scheibendach ausgebildet ist. Dadurch kann zusätzlich an zwei unterschiedlichen Orten die Information angezeigt werden. Dies kann ebenfalls zur Reduktion der Informationsdichte führen.

In einer weiteren vorteilhaften Ausgestaltungsform kann die Anzeigevorrichtung eine Blickerfassungseinrichtung zum Erfassen eines Blicks eines Insassen des Kraftfahrzeugs aufweisen und die Anzeigevorrichtung zum Anzeigen der Information auf dem zweiten Anzeigeteilbereich in Abhängigkeit des erfassten Blicks ausgebildet sein. Mit anderen Worten kann der Blick eines Fahrers erfasst werden und in der Richtung, in welcher der Fahrer blickt, kann dann die Information angezeigt werden. Dies führt dazu, dass der Fahrer des Kraftfahrzeugs die Information angezeigt bekommt, ohne die Blickrichtung zur Erfassung der Information im Wesentlichen ändern zu müssen. Insbesondere, sollte der Fahrer seinen Blick auf die Umgebung des Kraftfahrzeugs, beispielsweise den Straßenverkehr, wenden, so kann die Information zusätzlich entsprechend in seinem Blickfeld angezeigt werden. Dies führt zu einem sicheren Betrieb des Kraftfahrzeugs.

Ferner kann vorgesehen sein, dass die Anzeigevorrichtung eine Blickerfassungseinrichtung zum Erfassen eines Blicks eines Insassen des Kraftfahrzeugs aufweist und die Anzeigevorrichtung zum Bedienen der Anzeigevorrichtung in Abhängigkeit des erfassten Blicks ausgebildet ist. Mit anderen Worten, sollte beispielsweise der Fahrer auf eine von mehreren angezeigten Informationen blicken, so kann dies als Bediensignal durch die Blickerfassung angesehen werden. Durch Ansehen der angezeigten Information kann es dann zu der Bedienung der entsprechenden Information, sollte dies mit einer Funktion verknüpft sein, kommen. Dadurch kann die Bedienung von unterschiedlichen Funktionseinheiten im Kraftfahrzeug einfach und dennoch zuverlässig realisiert werden. Insbesondere kann dadurch der Fahrer vor weiteren Ablenkungen wie beispielsweise das Entfernen der Hände vom Lenkrad zum Bedienen gehindert werden, da die Bedienung lediglich durch die Blickerfassung realisiert werden kann. Dies führt zu einem sicheren Betrieb des Kraftfahrzeugs insbesondere im Straßenverkehr.

Das Kraftfahrzeug ist insbesondere als Personenkraftwagen ausgebildet.

Im Folgenden sind Ausführungsbeispiele der Erfindung beschrieben. Hierzu zeigt:
- Fig. 1: eine schematische Perspektivansicht eines Innenraums einer Ausführungsform eines Kraftfahrzeugs; und
- Fig. 2: eine schematische Schnittansicht eines Innenraums einer Ausführungsform des Kraftfahrzeugs.

In den Figuren bezeichnen gleiche Bezugszeichen jeweils funktionsgleiche Elemente.

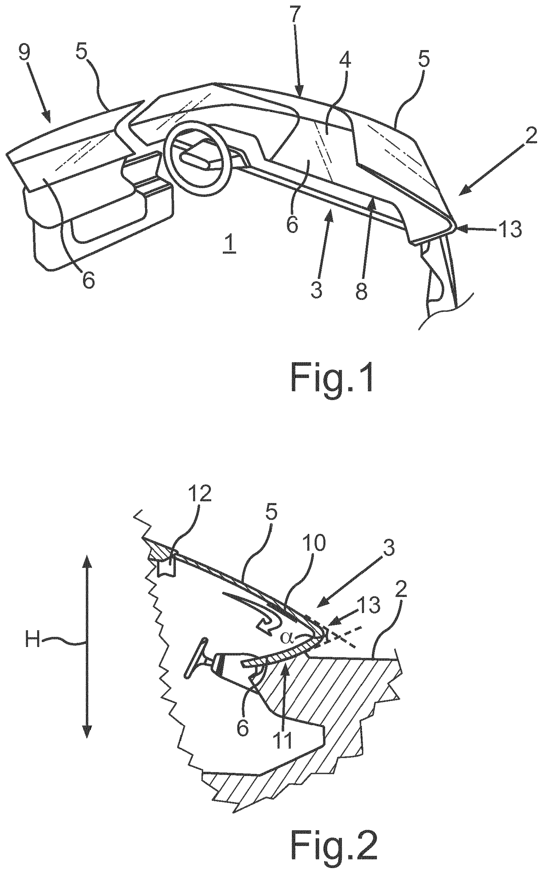

Fig. 1 zeigt in einer schematischen Perspektivansicht eine Ausführungsform eines Innenraums 1 einer Ausführungsform eines Kraftfahrzeugs 2. Das Kraftfahrzeug 2 weist eine Anzeigevorrichtung 3 zum Anzeigen zumindest einer Information 4 auf. Die Anzeigevorrichtung 3 weist einen ersten Teilbereich 5 und einen zweiten Anzeigeteilbereich 6 auf. Der erste Teilbereich 5 ist als Sichtscheibe 7, 9 des Kraftfahrzeugs 2 ausgebildet und begrenzt zumindest teilweise den Innenraum 1 des Kraftfahrzeugs 2. Der zweite Anzeigeteilbereich 6 ist zum Anzeigen der Information 4 ausgebildet.

In Fig. 1 sind zwei separate Anzeigevorrichtungen mit je einem ersten Teilbereich 5 und einem zweiten Anzeigeteilbereich 6 dargestellt. In einem Beispiel ist der erste Teilbereich 5 eine Seitenscheibe, beispielsweise auf der Fahrerseite. In einem zweiten Beispiel ist der erste Teilbereich 5 eine Frontscheibe beziehungsweise eine Windschutzscheibe. Es kann vorgesehen sein, dass beide Ausführungen in einem Kraftfahrzeug 1 realisiert sind. Es kann aber auch vorgesehen sein, dass lediglich eine von beiden Ausführungen in einem Kraftfahrzeug 1 realisiert ist.

Es ist vorgesehen, dass der erste Teilbereich 5 und der zweite Anzeigeteilbereich 6 einteilig miteinander ausgebildet sind, und somit ein einstückiges Bauteil bilden, wobei die Teilbereiche 5, 6 gewinkelt zueinander anmünden, und der zweite Anzeigeteilbereich 6 zumindest bereichsweise in den Innenraum 1 des Kraftfahrzeugs 2 hineinragend ausgebildet ist. Eine Anmündung 13 zwischen dem ersten Teilbereich 5 und dem zweiten Anzeigeteilbereich 6 kann im Querschnitt betrachtet leicht abgerundet sein, so dass eine Außenseite der Anmündung 13 beziehungsweise des Übergangs eine eckenfrei Kontur aufweist. Ein Winkel zwischen den Teilbereichen 5, 6 bemisst sich dann insbesondere zwischen Tangenten an die Außenseiten der Teilbereiche 5, 6.

Im folgenden Ausführungsbeispiel ist insbesondere gezeigt, dass der erste Teilbereich 5 als eine Frontscheibe 7, insbesondere als Windschutzscheibe, des Kraftfahrzeugs 2 ausgebildet ist. Insbesondere ist bei dieser Ausgestaltungsform dann beispielsweise vorgesehen, dass der zweite Anzeigeteilbereich 6 als Armaturenbrett 8 ausgebildet sein kann.

Ferner kann vorgesehen sein, dass der erste Teilbereich 5 als Seitenscheibe 9 des Kraftfahrzeugs 2 ausgebildet ist.

Beispielsweise kann vorgesehen sein, dass der zweite Anzeigeteilbereich 6 als berührungssensitiver Bildschirm zum Anzeigen der Information 4 und zum Bedienen der Anzeigevorrichtung 3 ausgebildet ist. Mit anderen Worten kann auf dem zweiten Anzeigeteilbereich 6 die Information 4 dargestellt werden und beispielsweise durch Berühren eines Fahrers des Kraftfahrzeugs 2 entsprechend eine Funktion, welche mit der Information 4 gekoppelt ist, bedient werden. Insbesondere ist es dadurch ermöglicht, dass zusätzlich eine Oberfläche im Kraftfahrzeug 2 geschaffen ist, mittels welcher eine Anzeige der Information 4 und eine Bedienung der Information 4 ermöglicht ist. Des Weiteren führt dies zu einer optischen Aufwertung und zu einer hohen Funktionalität innerhalb des Kraftfahrzeugs 2.

Insbesondere kann vorgesehen sein, dass der Fahrer des Kraftfahrzeugs 2 individuell die Information 4 auf dem zweiten Anzeigeteilbereich 6 anzeigen lassen kann. Mit anderen Worten kann beispielsweise durch Berührung des Fahrers des Kraftfahrzeugs 2 der Information 4 dieser die Information 4 örtlich frei auf dem zweiten Anzeigeteilbereich 6 verschieben. Dadurch kann eine Art Pinnwandfunktion für verschiedene Inhalte und Medien erreicht werden.

Fig. 2 zeigt in einer schematischen Schnittansicht eine Ausführungsform des Kraftfahrzeugs 2 mit einer Ausführungsform der Anzeigevorrichtung 3. Insbesondere zeigt die Fig. 2 die Einteiligkeit beziehungsweise die Einstückigkeit des Teilbereichs 5 mit dem zweiten Anzeigeteilbereich 6.

Insbesondere ist vorgesehen, dass, wie in der Fig. 2 gezeigt, in einem Querschnitt beziehungsweise Längsschnitt betrachtet, zwischen dem ersten Teilbereich 5, hier der Frontscheibe, und dem zweiten Anzeigeteilbereich 6 ein im Wesentlichen spitzer Winkel a, insbesondere zwischen 30 Grad und 80 Grad, ausgebildet ist. Dieser Winkel α ist an einer Anmündung 13 beziehungsweise an einem Übergang zwischen dem ersten Teilbereich 5 und dem zweiten Anzeigeteilbereich 6 ausgebildet. Insbesondere ist dieser Winkel α abhängig von dem Kraftfahrzeugtyp. Beispielsweise ist bei Sportkraftfahrzeugen ein spitzerer Winkel α ausgebildet, während beispielsweise bei Geländewagen ein stumpferer Winkel α ausgebildet ist.

Ferner kann vorgesehen sein, dass in dem ersten Teilbereich 5 zumindest bereichsweise eine dimmbare Folie 10 zum Anzeigen der auf dem zweiten Anzeigeteilbereich 6 angezeigten Information 4 integriert ist. Mit anderen Worten kann die Information 4, welche auf dem zweiten Anzeigeteilbereich 6 angezeigt ist, mittels der dimmbaren Folie 10 reflektiert beziehungsweise gespiegelt werden, sodass durch einen Fahrer des Kraftfahrzeugs 2 die Information 4 auf dem ersten Teilbereich 5 dargestellt ist. Beispielsweise kann dies zu einer sogenannten erweiterten Realität (Augmented Reality) führen. Dies kann beispielsweise zur Verwendung in einer Kopf-oben-Anzeigevorrichtung (Head-up-Display) genutzt werden.

Ferner kann vorgesehen sein, dass der zweite Anzeigeteilbereich 6 als Scheibenwurzel 11, mit anderen Worten insbesondere als Befestigung für die Sichtscheibe 7, 9, dient. Des Weiteren kann vorgesehen sein, dass insbesondere im Bereich der Scheibenwurzel 11 eine elektronische Recheneinrichtung angeordnet ist, welche beispielsweise zum Anzeigen der Information 4 im zweiten Anzeigeteilbereich 6 ausgebildet ist. Ferner ist es möglich, dass der zweite Anzeigeteilbereich 6 als Scheibendach ausgebildet ist. Mit anderen Worten kann der zweite Anzeigeteilbereich 6 auch als Verlängerung der Sichtscheibe 7, 9 in einer Fahrzeughochrichtung H des Kraftfahrzeugs 2 betrachtet am Dachhimmel ausgebildet sein. Insbesondere ist es dadurch ermöglicht, dass auch die bisher passive Oberfläche des Daches für die Anzeige der Information 4 herangezogen werden kann.

Bevorzugt kann vorgesehen sein, dass die Anzeigevorrichtung 3 zwei zweite Anzeigeteilbereich 6 aufweist, wobei ein zweiter Anzeigeteilbereich 6 als Scheibenwurzel 11 ausgebildet ist, und der zweite zweite Anzeigeteilbereich 6 als Scheibendach ausgebildet ist. Dadurch kann zusätzlich an zwei unterschiedlichen Orten die Information 4 angezeigt werden. Dies kann ebenfalls zur Reduktion der Informationsdichte führen.

Ferner kann vorgesehen sein, dass die Anzeigevorrichtung 3 eine Blickerfassungseinrichtung 12 aufweist, welche zum Erfassen eines Blicks eines Insassen des Kraftfahrzeugs 2 ausgebildet ist und die Anzeigevorrichtung 3 zum Anzeigen der Information 4 auf dem zweiten Anzeigeteilbereich 6 in Abhängigkeit des erfassten Blicks ausgebildet ist. Ferner kann vorgesehen sein, dass die Anzeigevorrichtung 3 zum Bedienen der Anzeigevorrichtung 3 in Abhängigkeit des erfassten Blicks ausgebildet ist. Mit anderen Worten kann in Abhängigkeit des Blicks sowohl die Information 4 entsprechend in der Blickrichtung des Insassen angezeigt werden und gleichzeitig ist es auch möglich, dass in Abhängigkeit des erfassten Blicks auch eine Bedienung einer Funktion, welche insbesondere mit der Information 4 verknüpft ist, durchgeführt werden kann. Dies führt zu einer verbesserten Bedienung der Anzeigevorrichtung 3 und insbesondere zu einer geringeren Ablenkung beispielsweise des Fahrers des Kraftfahrzeugs 2 während eines Fahrbetriebs, sodass insgesamt mittels der Anzeigevorrichtung 3 die Sicherheit im Straßenverkehr erhöht werden kann.

Der erste Teilbereich 5 kann auch als Anzeigeteilbereich zum optischen Anzeigen von Informationen ausgebildet sein.

Insgesamt zeigen die Beispiele, wie durch die Erfindung ein unendliches Bildschirm-Armaturenbrett bereitgestellt werden kann.

## Patentansprüche

1. Kraftfahrzeug (2) mit einer Anzeigevorrichtung (3) zum Anzeigen zumindest einer Information (4), wobei die Anzeigevorrichtung (3) einen als Sichtscheibe (7, 9) des Kraftfahrzeugs (2) ausgebildeten und zumindest bereichsweise einen Innenraum (1) des Kraftfahrzeugs (2) begrenzenden ersten Teilbereich (5) und einen zweiten Anzeigeteilbereich (6), welcher zum Anzeigen der Information (4) ausgebildet ist, aufweist, **dadurch gekennzeichnet, dass**
der erste Teilbereich (5) und der zweite Anzeigeteilbereich (6) einteilig ausgebildet sind, wobei der erste Teilbereich (5) und der zweite Anzeigeteilbereich (6) gewinkelt zueinander anmünden, und der zweite Anzeigeteilbereich (6) zumindest bereichsweise in den Innenraum (1) des Kraftfahrzeugs (2) hineinragend ausgebildet ist.

2. Kraftfahrzeug (2) nach Anspruch 1, wobei der erste Teilbereich (5) als eine Frontscheibe (7) des Kraftfahrzeugs (2) ausgebildet ist.

3. Kraftfahrzeug (2) nach einem der vorhergehenden Ansprüche, wobei der zweite Anzeigeteilbereich (6) als Armaturenbrett (8) des Kraftfahrzeugs (2) ausgebildet ist.

4. Kraftfahrzeug (2) nach Anspruch 1, wobei der erste Teilbereich (5) als eine Seitenscheibe (9) des Kraftfahrzeugs (2) ausgebildet ist.

5. Kraftfahrzeug (2) nach einem der vorhergehenden Ansprüche, wobei der zweite Anzeigeteilbereich (6) als berührungssensitiver Bildschirm zum Anzeigen der Information (4) und zum Bedienen der Anzeigevorrichtung (3) ausgebildet ist.

6. Kraftfahrzeug (2) nach einem der vorhergehenden Ansprüche, wobei zwischen dem ersten Teilbereich (5) und dem zweiten Anzeigeteilbereich (6) ein spitzer Winkel (a), insbesondere zwischen 30° und 80°, ausgebildet ist.

7. Kraftfahrzeug (2) nach einem der vorhergehenden Ansprüche, wobei in dem ersten Teilbereich (5) zumindest bereichsweise eine dimmbare Folie (10) zum Anzeigen der auf dem zweiten Anzeigeteilbereich (6) angezeigten Information (4) integriert ist.

8. Kraftfahrzeug (2) nach einem der vorhergehenden Ansprüche, wobei der zweite Anzeigeteilbereich (6) als Scheibenwurzel (11) oder als Scheibendach ausgebildet ist.

9. Kraftfahrzeug (2) nach einem der vorhergehenden Ansprüche, wobei die Anzeigevorrichtung (3) eine Blickerfassungseinrichtung (12) zum Erfassen eines Blicks eines Insassen des Kraftfahrzeugs (2) aufweist und die Anzeigevorrichtung (3) zum Anzeigen der Information (4) auf dem zweiten Anzeigeteilbereich (6) in Abhängigkeit des erfassten Blicks ausgebildet ist.

10. Kraftfahrzeug (2) nach einem der vorhergehenden Ansprüche, wobei die Anzeigevorrichtung (3) eine Blickerfassungseinrichtung (12) zum Erfassen eines Blicks eines Insassen des Kraftfahrzeugs (2) aufweist und die Anzeigevorrichtung (3) zum Bedienen der Anzeigevorrichtung (3) in Abhängigkeit des erfassten Blicks ausgebildet ist.

## Claims

1. Motor vehicle (2) having a display device (3) for displaying at least one item of information (4), wherein the display device (3) has a first partial region (5) which is formed as a window (7, 9) of the motor vehicle (2) which is at least in some regions an interior (1) of the motor vehicle (2), and a second display partial region (6) which is configured for displaying the item of information (4),
**characterised in that**
the first partial region (5) and the second display partial region (6) are designed in one piece, wherein the first partial region (5) and the second display partial region (6) are angled with respect to one another, and the second display partial region (6) is designed so as to protrude at least in some regions into the interior (1) of the motor vehicle (2).

2. Motor vehicle (2) according to claim 1, wherein the first partial region (5) is designed as a front windscreen (7) of the motor vehicle (2).

3. Motor vehicle (2) according to any of the preceding claims, wherein the second display partial region (6) is designed as an instrument panel (8) of the motor vehicle (2).

4. Motor vehicle (2) according to claim 1, wherein the first partial region (5) is designed as a side window (9) of the motor vehicle (2).

5. Motor vehicle (2) according to any of the preceding claims, wherein the second display partial region (6) is designed as a touch-sensitive screen for displaying the item of information (4) and for operating the display device (3).

6. Motor vehicle (2) according to any of the preceding claims, wherein between the first partial region (5) and the second display partial region (6) is formed an acute angle (a), particularly of between 30° and 80°.

7. Motor vehicle (2) according to any of the preceding claims, wherein in the first partial region (5) is integrated at least in some regions a dimmable film (10) for displaying the item of information (4) displayed on the second display partial region (6).

8. Motor vehicle (2) according to any of the preceding claims, wherein the second display partial region (6) is designed as a windowpane base (11) or as a windowpane roof.

9. Motor vehicle (2) according to any of the preceding claims, wherein the display device (3) has an eye-tracking device (12) for detecting a glance of an occupant of the motor vehicle (2) and the display device (3) is configured for displaying the item of information (4) on the second display partial region (6) depending on the detected glance.

10. Motor vehicle (2) according to any of the preceding claims, wherein the display device (3) has an eye-tracking device (12) for detecting a glance of an occupant of the motor vehicle (2) and the display device (3) is configured for operating the display device (3) depending on the detected glance.

## Revendications

1. Véhicule automobile (2) comportant un dispositif d'affichage (3) destiné à afficher au moins une information (4), dans lequel le dispositif d'affichage (3) présente une première zone partielle (5) réalisée en tant que vitre (7, 9) du véhicule automobile (2) et délimitant au moins partiellement un espace intérieur (1) du véhicule automobile (2), et une seconde zone partielle d'affichage (6), laquelle est réalisée pour afficher l'information (4), **caractérisé en ce que**
la première zone partielle (5) et la seconde zone partielle d'affichage (6) sont réalisées d'un seul tenant, dans lequel la première zone partielle (5) et la seconde zone partielle (6) d'affichage se rejoignent mutuellement de manière coudée, et la seconde zone partielle d'affichage (6) est réalisée de telle sorte qu'elle fait saillie au moins par endroits dans l'espace l'intérieur (1) du véhicule automobile (2).

2. Véhicule automobile (2) selon la revendication 1, dans lequel la première zone partielle (5) est réalisée sous la forme d'un pare-brise (7) du véhicule automobile (2).

3. Véhicule automobile (2) selon l'une quelconque des revendications précédentes, dans lequel la seconde zone partielle d'affichage (6) est réalisée sous la forme d'un tableau de bord (8) du véhicule automobile (2).

4. Véhicule automobile (2) selon la revendication 1, dans lequel la première zone partielle (5) est réalisée sous la forme d'une vitre latérale (9) du véhicule automobile (2).

5. Véhicule automobile (2) selon l'une quelconque des revendications précédentes, dans lequel la seconde zone partielle d'affichage (6) est réalisée sous la forme d'un écran tactile pour afficher les informations (4) et pour faire fonctionner le dispositif d'affichage (3).

6. Véhicule automobile (2) selon l'une quelconque des revendications précédentes, dans lequel un angle aigu (a), en particulier compris entre 30° et 80°, est réalisé entre la première zone partielle (5) et la seconde zone partielle d'affichage (6).

7. Véhicule automobile (2) selon l'une quelconque des revendications précédentes, dans lequel un film à intensité réglable (10) pour afficher l'information (4) affichée sur la seconde zone partielle d'affichage (6) est intégré dans la première zone partielle (5) au moins par endroits.

8. Véhicule automobile (2) selon l'une quelconque des revendications précédentes, dans lequel la seconde zone partielle d'affichage (6) est réalisée sous la forme d'une base de vitre (11) ou d'un toit ouvrant.

9. Véhicule automobile (2) selon l'une quelconque des revendications précédentes, dans lequel le dispositif d'affichage (3) présente un appareil de détection de regard (12) pour détecter un regard d'un occupant du véhicule automobile (2), et le dispositif d'affichage (3) est réalisé pour afficher l'information (4) sur la seconde zone partielle d'affichage (6) en fonction du regard détecté.

10. Véhicule automobile (2) selon l'une quelconque des revendications précédentes, dans lequel le dispositif d'affichage (3) présente un appareil de détection de regard (12) pour détecter un regard d'un occupant du véhicule automobile (2), et le dispositif d'affichage (3) est réalisé pour faire fonctionner le dispositif d'affichage (3) en fonction du regard détecté.
